Europäisches Patentamt

European Patent Office

Office européen des brevets

(19)

(11) Publication number: **0 077 094**
**B1**

(12) **EUROPEAN PATENT SPECIFICATION**

(45) Date of publication of patent specification: **26.03.86**

(51) Int. Cl.⁴: **H 02 P 8/00**

(21) Application number: **82201233.2**

(22) Date of filing: **04.10.82**

(54) Device for controlling a stepping motor.

(30) Priority: **08.10.81 NL 8104590**

(43) Date of publication of application:
**20.04.83 Bulletin 83/16**

(45) Publication of the grant of the patent:
**26.03.86 Bulletin 86/13**

(84) Designated Contracting States:
**DE FR GB NL**

(56) References cited:
**DE-A-2 850 539**
**NL-A-7 804 540**
**US-A-4 140 956**
**US-A-4 145 644**

(73) Proprietor: **Océ-Nederland B.V.**
**St. Urbanusweg 43**
**NL-5914 CC Venlo (NL)**

(72) Inventor: **Eertink, Bastiaan Bernard Boele**
**Land van kessel 7**
**Grubbenvorst (NL)**

(74) Representative: **Bleukx, Lucas Lodewijk Maria, Ir.**
**Océ-Nederland B.V. Patents & Information Dept.**
**Postbus 101**
**NL-5900 MA Venlo (NL)**

Courier Press, Leamington Spa, England.

## Description

The invention relates to a device for generating stepping motor control pulses with a frequency gradually changing in time, the frequency of the control pulses being derived from the frequency of a constant frequency source according to a predetermined relation, which device is provided with a counter for counting the pulses delivered by the constant frequency source and a memory with a plurality of addressable memory locations, in which the predetermined relation is stored.

Such a device is known from US Patent No. 4 241 301 (NL—A—7804 540). In the known device the control pulses are generated by means of the counter, acting as a programmable frequency divider. Each time the count of the counter reaches a predetermined constant value a stepping motor control pulse is generated and the counter is loaded with the next number of a set of predetermined numbers, defining the predetermined relation. The consecutive numbers of the set are stored in the memory at locations with consecutive addresses. The output of the memory is connected to the parallel inputs of the frequency divider. An address counter, cooperating with the frequency divider is used, to generate the address of the location of the next number of the set each time the predetermined value is reached. Thus, this device requires two counters.

In the invention the counting outputs of the counter are connected to the address inputs of the memory in that the contents of each memory location represent either a first state or second state, in that the memory locations which contents represent the second state and those which contents represent the first state are arranged alternately in groups with consecutive addresses and in that the memory is provided with an output on which there is a signal corresponding to the state represented by the contents of the addressed memory locations, in that the sizes of the groups gradually change, reckoning from a starting address and in that for each group the number of memory locations is equal to a predetermined number belonging to that group.

In the device according to the invention the count of the counter, connected to the constant frequency source, is directly used as address of the memory. The output of the memory is directly used as control signal. Consequently only one counter is needed.

A preferred embodiment of a device according to the invention is characterised in that the size of a group of a first number of groups decreases with increasing distance of the addresses of that group from a starting address and in that means are provided which, after the count corresponding to the address most distant from the starting address has been reached, restrict the number of possible counts of the pulse counter to a selected cluster of counts in order to run through them again and again in the same sequence, which counts belong to the cluster address groups of memory locations belonging to the sub-set.

Consequently, the stepping motor in a specific application can be started in the most suitable way for that application and can be kept in movement in accordance with a specific pattern of signal pulses. By limiting the number of possible counts, the number of memory locations addressed by those counts is restricted so that each time the pulse counter traverses the selected cluster of counts and the content of the associated memory locations has generated a specific signal pulse pattern at the memory output, those counts are again traversed in the same sequence and the same specific signal pulse pattern is generated afresh.

A further preferred embodiment of a device according to the invention is characterised in that the groups of memory locations addressed by the selected cluster of counts are so selected that the sum of the number of successive memory locations forming a group and in which the contents of the memory locations represent the first-state and the number of successive memory locations forming a group joining the last-mentioned group and in which the contents of the memory locations represent the second state, is always the same.

Consequently, on each traverse of the selected cluster of counts the frequency of the signal pulses at the memory output is always the same so that the stepping motor is controlled at a fixed frequency.

Another preferred embodiment of a device according to the invention is characterised in that the size of a group in a second number of groups increases with increasing distance of the addresses of that group from a starting address and in that means are provided which, after the count corresponding to the address most distant from the starting address has been reached, stop the pulse counter.

Consequently, the stepping motor can be stopped in a defined and predictable manner.

Stepping motors controlled in the manner described can be used particularly advantageously in applications in which accurate knowledge is required of the angle of rotation of the stepping motor, or a linear displacement associated therewith during the changing of the speed of rotation of the stepping motor. The expression "changing of the speed of rotation of the stepping motor" includes starting and stopping of the motor.

The invention will now be described with reference to the accompanying drawings wherein:

Fig. 1 is a block diagram of an embodiment of a device for controlling a stepping motor.

Fig. 1A is an output signal of a device according to Fig. 1.

Fig. 2 is a developed diagram of a block diagram according to Fig. 1.

Fig. 2A is an example of the addresses and contents of a number of the memory locations of the memory in Fig. 2.

Fig. 3A and 3B are examples of a required course of starting and stopping a stepping motor.

Figs. 4A to 4C inclusive illustrate three ways in which the contents of the memory locations can be determined in order to obtain a required course.

Fig. 5 is a block diagram of a second embodiment of a device according to the invention.

Fig. 6A shows part of a memory used in a device according to Fig. 5.

Fig. 6B shows another part of a memory used in a device according to Fig. 5.

Fig. 7 is a flow diagram of a programme used in a device according to Fig. 5.

Fig. 8 is a flow diagram of an interrupt programme used in a device according to Fig. 5.

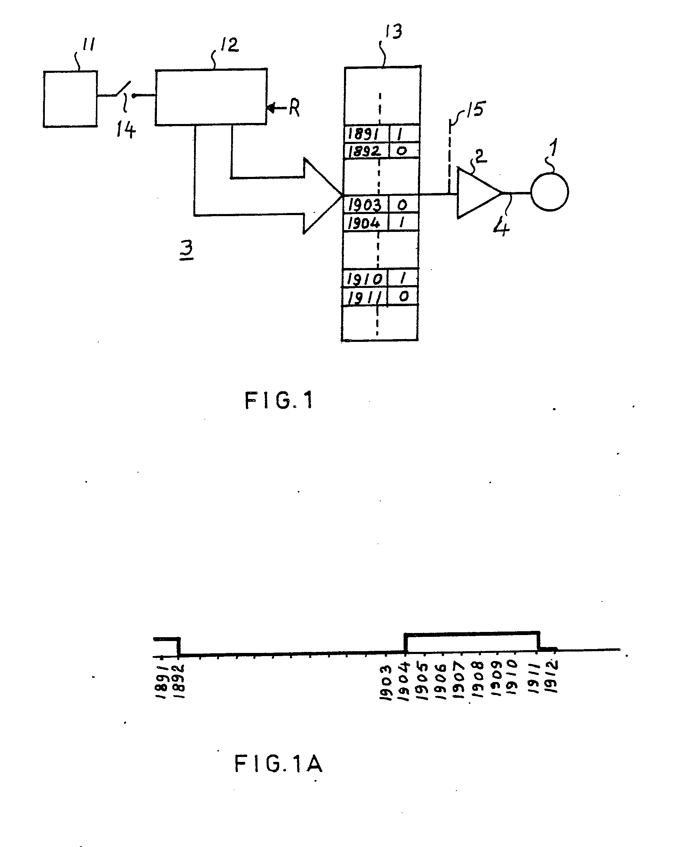

Referring to Fig. 1 reference 1 denotes a stepping motor. A power amplifier 2 receives pulses from a pulse source 3 and amplifies the received pulses so that each 0—1 changeover results in a pulse signal that is fed to the stepping motor via line 4 and that causes the stepping motor to rotate one step on. Pulse source 3 comprises a pulse generator 11, a pulse counter 12 and an addressable memory 13. A pulse output of pulse generator 11 is adapted to be connected via a switch 14 to a counting input of pulse counter 12. The number of counted pulses is present in binary form at the counting output of the pulse counter 12. The counting output of pulse counter 12 is connected to the address input of memory 13. Each memory location of memory 13 contains either a "0" or a number other than "0". The memory output of memory 13 is connected to an input of the power amplifier 2. Depending upon the content of the addressed memory location the output signal of memory 13 is either a "0" signal or a signal differing from "0".

The memory locations of memory 13 are arranged in groups with consecutive addresses and with the same content.

Groups whose memory location content is equal to "0" alternate with groups whose memory location content differs from "0". The size of the groups decreases with increasing address. As an example, two of such groups are shown in Fig. 1, the group having the addresses 1892 . . . 1903 with "0" as content and a group having the addresses 1904 . . . 1910 with "1" as content.

The operation of a device according to the block diagram shown in Fig. 1 is as follows:

Before switch 14 connects the pulse output of pulse generator 11 to the counting input of pulse counter 12, a predetermined count, generally 0, is present at the counting output of the pulse counter 12, and is produced for instance by a reset signal R. The signal present at the counting output of pulse counter 12 ensures that the content of the starting memory location whose address is the same as that signal is present at the memory output of the memory 13. By means of the switch 14 the pulse generator 11 is then connected to the pulse counter 12. As a result of pulses being fed to the pulse counter 12, the binary number at the counting output thereof will become one more on each pulse received from the pulse generator 11.

Since the counting output of the pulse counter 12 is connected to the address input of the memory 13, a subsequent memory location of memory 13 will be addressed in response to each pulse from the pulse generator 11. This means that the memory locations following the starting memory location are addressed consecutively and their content fed to the memory output at the frequency at which the pulse generator 11 generates pulses.

In Fig. 1A is indicated how the signal at the memory output of the memory 13 changes on consecutive addressing of the memory locations with the addresses 1891 . . . 1912.

Assuming that the output signal of pulse counter 12 corresponds to address 1891, the content of the memory location with address 1892 will appear at the memory output of the memory 13 in response to the next pulse from the pulse generator 11. Since the content of the memory location with the address 1891 was a "1" and the content of the memory location with the address 1892 was a "0", the output signal of the memory 13 therefore will change from a "1" signal to a "0" signal in response to the said pulse.

Since the content of the memory locations having the addresses 1893 . . . 1903 is also "0", the output signal of the memory 13 will not change in response to the following 11 pulses from the pulse generator 11. On the next pulse from the pulse generator 11, the output signal of the pulse counter 12 will correspond to the memory location having the address 1904. The content of the memory location having the address 1904 is "1" and the output signal of the memory 13 will therefore change from a "0" signal to a "1" signal in response to this pulse from the pulse generator 11. This change of a "0" signal to a "1" signal is amplified by the power amplifier 2 and fed to the stepping motor 1, which makes one step as a result. During the next 6 pulses from the pulse generator 11, the output signal from the memory 13 no longer changes because the content of the memory locations 1905 . . . 1910 is also "1". In response to the next pulse from the pulse generator 11, the output signal of the memory 13 again changes to a "0" signal because the content of the memory location having the address 1911 is a "0".

From the starting memory location the content of successive memory locations is fed to the memory output in the manner described above, at the frequency at which the pulse generator 11 generates pulses. The size of the groups of memory locations having the same content and having consecutive addresses is initially large and decreases as the addresses increase. As the sizes of the groups decrease, it will occur more frequently that more than two consecutive groups are equal sized, in order to achieve smooth starting of the stepping motor. Pulse generator 11 generates pulses at a predetermined frequency. As a result, initially, i.e. just after the switch 14 has been closed, the frequency of the pulses at the memory output of memory 13 will be low and this frequency will increase as memory locations of a higher address are addressed.

Finally this frequency will have reached a required value, whereafter the power amplifier 2 will be supplied only with that frequency, e.g. from a pulse source not shown and indicated diagrammatically by the dashed line 15.

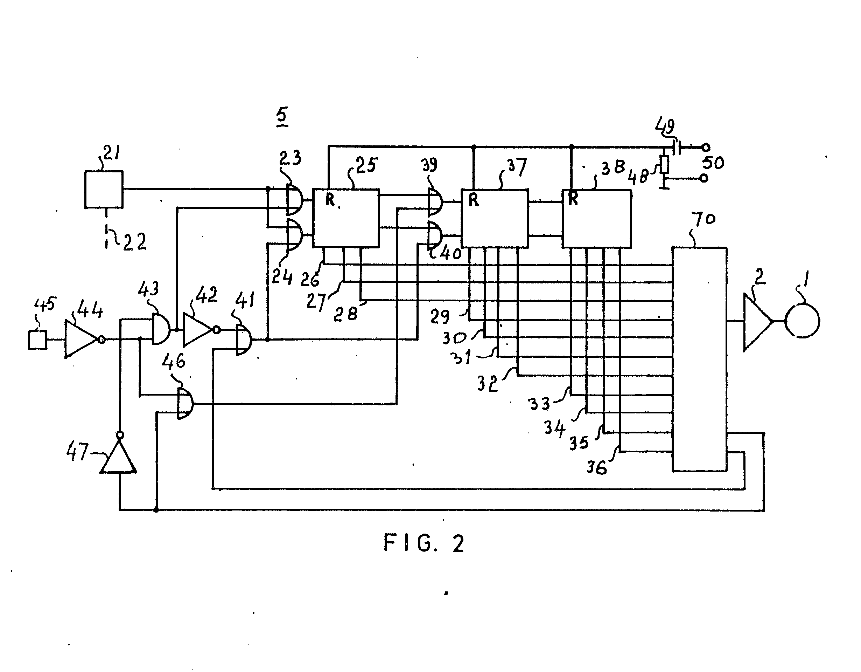

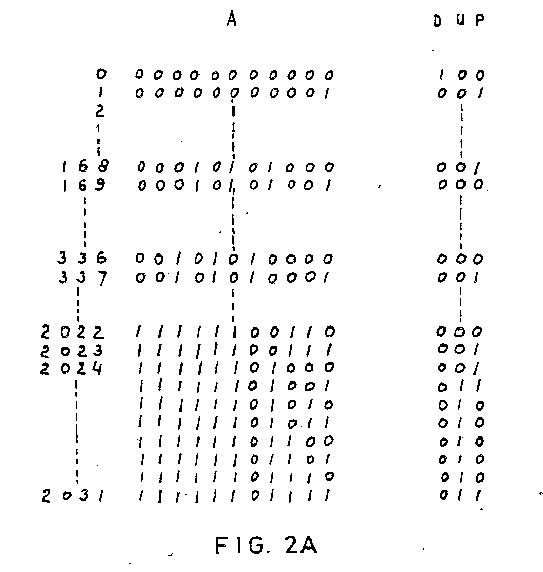

Another way of supplying pulses at a frequency of the required value to the power amplifier will be described in detail with reference to Fig. 2. The stepping motor can also be stopped in the same way as described above in connection with its starting. For this purpose, for example, the memory contains a second number of groups of memory locations, the sizes of which groups increase with increasing address. By means of the signal R the count of counter 12 is made equal to the starting address of the second number of groups of memory locations and pulses are fed from the pulse generator 11 to the pulse counter 12 from a suitable moment on. Through the changing count of the pulse counter 12 the content of the memory locations of the second number of groups is then fed successively to the power amplifier 2. Since the sizes of the groups increase with increasing address, the frequency of the pulse signal at the memory output of memory 13 will decrease and the stepping motor will stop not only gradually, but also in a predetermined manner. This is of great importance for all those applications in which both rapid rotation of the stepping motor and very accurately determined starting and/or end positions of the stepping motor are required.

If the speed of rotation of the stepping motor is to be capable of being changed, the pulse generator 11 can be so selected that the pulse frequency can be adjusted according to the required speed of rotation of the stepping motor.

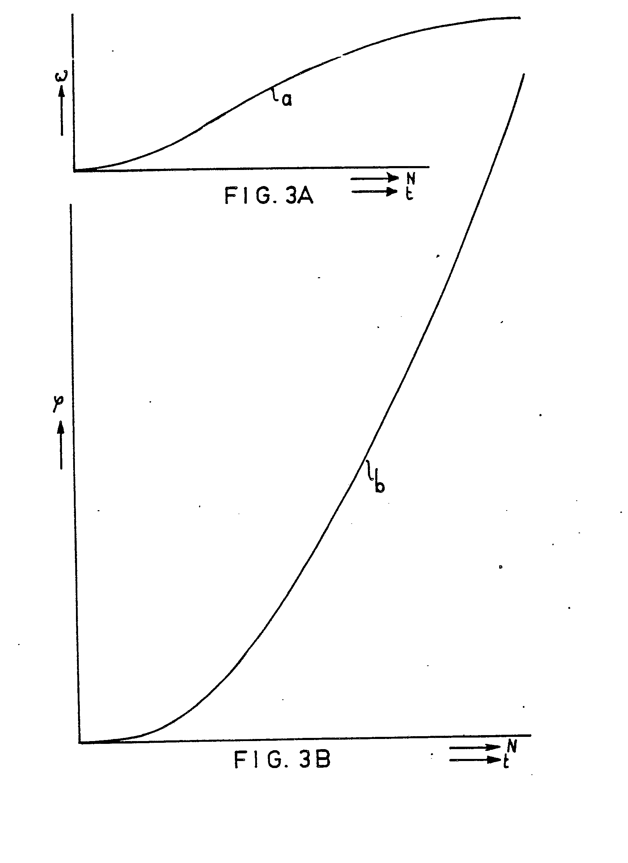

If it is required to start the stepping motor via one of a plurality of different speed profiles (see Fig. 3) a number of groups of memory locations can be reserved for each speed profile. It may be required for the stepping motor to be capable of being started or stopped in more than one way. A number of groups of memory locations with consecutive addresses in the memory 13 can be selected for each way, with a starting address and an end address, the pulse counter 12 traversing the counts between the values corresponding to the relevant starting address and the relevant end address.

If the memory 13 is in the form of a replceable integrated circuit, an integrated circuit of this kind provided with the correct content can be placed in the control device for each way in which the stepping motor is to be capable of being started.

Fig. 2 shows a control device 5 for a stepping motor 1, which control device delivers pulses to a power amplifier 2 which controls the stepping motor 1 with the amplified pulses. In response to each 0—1 changeover of the offered pulses the stepping motor 1 rotates one step further. The control device 5 comprises a pulse generator 21 which delivers pulses at a predetermined frequency, the term "predetermined" denoting that the frequency is not changed between starting and subsequent stopping of the stepping motor 1. The pulse generator 21 can be synchronized with another pulse source as shown diagrammatically by dashed line 22, the frequency of which can in the course of time fluctuate slightly about an equilibrium value. It is also possible to preset the pulse frequency of the pulse generator 21 to a required value so that the stepping motor 1 will be brought to a required speed of rotation. The pulse output of pulse generator 21 is connected to a first input of a 2-input OR gate 23 and to a first input of a 2-input OR gate 24. The output of the OR gate 23 is connected to the UP input of an UP/DOWN counter 25. The output of the OR gate 24 is connected to the DOWN input of the UP/DOWN counter 25. The UP/DOWN counter 25 is a 3-bit binary counter. The three output bits of counter 25 are connected by lines 26, 27 and 28 to the three least significant bits of the address input of an addressable memory 70. Of the other bits of the address input of memory 70, a number is connected via lines 29, 30, 31 and 32 to the four output bits of the 4-bit UP/DOWN counter 37 and the others are connected via the lines 33, 34, 35 and 36 to the four output bits of the 4-bit UP/DOWN counter 38. The UP output of the UP/DOWN counter 25 is connected to a first input of a 2-input OR gate 39. The output of the OR gate 39 is connected to the UP input of the UP/DOWN counter 37. The DOWN output of the UP/DOWN counter 25 is connected to a first input of a 2-input OR gate 40. The output of the OR gate 40 is connected to the DOWN input of the UP/DOWN counter 37. The UP and the DOWN output of the UP/DOWN counter 37 are connected to the UP and the DOWN input of the UP/DOWN counter 38 respectively. The second input of the OR gate 24 and the second input of the OR gate 40 are both connected to the output of a 2-input OR gate 41.

A first input of the OR gate 41 is connected via an INVERTER 42 to the output of a 2-input AND gate 43.

The output of the AND gate 43 is also connected to the second input of the OR gate 23. A first input of the AND gate 43 is connected via an INVERTER 44 to a signal source 45. The signal source 45 delivers a "1" or a "0" signal depending on whether the counters 25, 37, and 38 are to count up or down, or whether the stepping motor 1 is to be started or stopped. The output of INVENTOR 44 is also connected to the first input of a 2-input OR gate 46. The output of OR gate 46 is connected to the second input of OR gate 39. The second input of OR gate 46 is connected to one of the output bits of the memory 70, which we shall hereinafter refer to as the UP output. The UP output is also connected to the second input of the AND gate 43 via the INVERTER 47. A second output of memory 70, which we shall hereinafter refer to as the DOWN output, is connected to the second input of the OR gate 41. A third output of memory 70 which we shall hereinafter refer to as the PULSE output, is connected to the input of the power amplifier 2, the output of which is connected to the stepping motor 1. The RESET inputs R of the UP/DOWN counters 25, 37 and 38 are connected to the junction of a resistor 48 and a capacitor 49 which are connected in series with one another between the poles of a feed voltage source 50 for the control device 5.

In the control device 5 as shown in Fig. 2, memory 70 should be at least a 3-bit type, i.e. each memory location must be capable of containing at least a 3-bit number, i.e. one bit for the PULSE output, one bit for the UP output and one bit for the DOWN output. These three bits are hereinafter referred to respectively as the PULSE bit P, the UP bit U and the DOWN bit D. An 11 bit addressing is also shown, simply by way of example, since it can if required be one of more or less bits. It should be noted for example that the counters 25, 37, 38 can be integrated CMOS circuits of the type 40193 and that the memory 70 can be an 8-bit EPROM of type 2716 made by Intel.

The operation of the control device 5 will now be described, reference being made to Fig. 2A in which the address and the content of the DOWN bit D, the UP bit U and the PULSE bit P are shown in respect of a number of memory locations.

By way of example, the PULSE bit P of the group of memory locations whose addresses run from 00000000001 to 00010101000 inclusive is equal to "1" and of the joining group of memory locations with the addresses 00010101001 to 00100010000 inclusive is equal to "0". Of the next group beginning with address 00100010001, the PULSE bit is again "1" and so on. The sizes of the groups decrease continuously as the address increases. The content of the memory locations having the address 11111100110 to 11111101111 inclusive is also shown for reasons which will be apparent from the following.

As a result of the supply voltage being switched on, a pulse forms at the junction of resistor 48 and capacitor 49 and resets the counters 25, 37 and 38, i.e. the three counters carry a "0" signal on all the outputs.

As a result, in memory 70 memory location of address 00000000000, hereinafter also referred to as memory location "0" (=zero decimal) is addressed and the relevant content of memory location "0", i.e. the DOWN bit, the UP bit and the PULSE bit, is present at the relevant outputs of memory 70.

In this case the DOWN output carries a "1" signal and the UP output and the PULSE output carry a "0" signal. Assuming that the output signal of the signal source 45 is a "0" signal, i.e. the stepping motor does not need to be started, then with the known truth tables for AND and OR gates and INVERTERS it is a simple matter to check that at least one of the inputs of each of the OR gates 23, 24, 39 and 40 carries a "1" signal. Consequently the output signal of none of the OR gates 23, 24, 39 and 40 can change and hence none of the output signals of the counters 25, 37 and 38 on lines 26, ..., 36 changes. The existing situation is thus maintained. The situation will change as soon as the signal source carries a "1" signal in order to start the stepping motor 1. Signal source 45 may be a manually operated switch or alternatively form part of the control system of a device with which the stepping motor 1 co-operates. Several possibilities are feasible for the signal source 45. The only important fact in the scope of the invention is that the signal source 45 delivers a "1" signal in order to start the stepping motor 1 and keep it going, and a "0" signal in order to stop the stepping motor 1 and keep it stopped.

The appearance of a "1" signal at the output of signal source 45 results in one of the inputs of the OR gates 23 and 39 carrying a "0" signal so that counters 25, 37 and 38 count up. At least one of the inputs of each of the OR gates 24 and 40 continues to carry a "1" signal, i.e. those inputs which are connected to the output of the OR gate 41. After the counter 25 has counted one pulse, memory location "1" is addressed. The relevant content of this memory location is as follows: DOWN bit 0, UP bit 0 and PULSE bit 1, hereinafter referred to as 001.

Both the signal at the DOWN output and the signal at the PULSE output change in value in response to the first counted pulse. The change of the DOWN output, which is connected only to an input of the OR gate 41, has no effect on the output signal of the OR gate 41, and hence no effect on the output signals of the OR gates 24 and 40, because the output signal of the INVERTER 42 is a "1" signal. The change of the signal at the PULSE output from a "0" signal to a "1" signal results in the stepping motor 1 being rotated one step via the power amplifier 2. The second pulse counted by the counter 25 results in memory location "2" being addressed. The content of memory location "2" in respect of the relevant bits is the same as that of memory location "1". The output signals at the DOWN output, the UP output and the PULSE output do not therefore change. This situation continues up to and including the 168th pulse. After the 168th pulse has been counted, memory location "168" is addressed (see Fig. 2A), the relevant content of which is still equal to the content of memory location "1". After the 169th pulse has been counted, memory location "169" is addressed. The content of memory location "169" differs from the content of memory location "168" in that the PULSE bit P is 0. In response to the 169th pulse, the signal at the PULSE output changes from a "1" signal to a "0" signal. Since stepping motor 1 reacts solely to a 0—1 changeover and not to a 1—0 changeover, stepping motor 1 remains stationary in the position which was occupied after the first pulse. This situation does not change up to and including the 336th pulse.

After the 337th pulse has been counted, memory location "337" is addressed. The relevant content of memory location "337" is again equal to the relevant content of the memory locations "1", . . ., "168", i.e. 001.

In response to the 337th pulse the output signal at the PULSE output changes from a "0" signal to a "1" signal and as a result the stepping motor 1 rotates one step on. The output signals of the DOWN output and the UP output do not change. The output signals of the DOWN, UP and PULSE output then continue to remain unchanged for some time. As discussed hereinbefore in connection with Fig. 1, the number of memory locations following memory location "337" whose content is equal to that of memory location "337" is smaller than or at most equal to 167, so that the duration of the "1" signal at the PULSE output is shorter than or equal to the duration of the "1" signal that was present at the PULSE output during the pulses 1 to 168 inclusive. The groups of memory locations with consecutive addresses having the same content, such as memory locations "1" to "168" inclusive and "169" to "336" inclusive decrease in size with increasing address. Finally, the groups have become so small that the sum of the number of consecutive memory locations with a 1 at the PULSE bit and with a 0 at the PULSE bit is equal to 8. Consequently, as these memory locations are traversed a pulse signal is formed at the PULSE output with a frequency which is one-eighth of the frequency of the pulse generator 21. This continues until memory location "2023" inclusive, the relevant content of which is 001. The next 8 memory locations "2024" to "2031" inclusive have a special significance. By means of memory locations "2024", . . ., "2031" it is possible to continue to control the stepping motor at the frequency reached. To this end, the relevant content of these memory locations is as shown in Fig. 2A. The DOWN bit is always 0, while the UP bit is 1 except in memory location "2024". The PULSE bit is 1 in the memory locations "2024", "2025" and "2031" and 0 in the memory locations "2026", . . ., "2030".

Of the memory locations "2024", . . ., "2031", only the three least significant bits always change value. Those are the three output bits of the counter 25. The output bits of the counters 37 and 38 do not change value when traversing the counts which address the memory locations "2024", . . ., "2031". By ensuring that the counts of counters 37 and 38 cannot change and that the count of counter 25 can change, an eight-counter is obtained, because by the UP output carrying a "1" signal via the INVERTER 47, the AND gate 43, the INVERTER 42 and the OR gate 41, the OR gates 24 and 40 do not pass signals to the DOWN input of the counters 25 and 37, and via the OR gate 46 the OR gate 39 does not pass signals to the UP input of the counter 37.

Only the OR gate 23 still passes signals to the UP input of counter 25. Consequently, the counting output of counter 25 successively traverse the counts 000, 001, 010, 011, 100, 101, 110, 111, 000, 001, 010, etc. It should be noted that to achieve this result it is not essential for the UP bit in the memory locations "2025", . . . , "2030" to be a 1. It is important that the UP bit should be 1 in memory location "2031" because then there is generated by counter 25 at the input of gate 39 a signal that can be counted by counter 37. Since the UP bit, however, is 1 in memory location "2031", the signal transmission is blocked by the OR gate 39. In connection with the following description of a controlled method of re-stopping stepping motor 1 by means of control device 5, the memory locations "2025", . . ., "2030" are however also provided with a 1 at the location of the UP bit. The stoppage of the stepping motor 1 started and kept in motion . in the manner described above is initiated by making the output signal of signal source 45 zero. If this accidentally occurs at the time when one of the memory locations "2024" or "2031" is addressed, then stoppage of the steppping motor 1 can immediately be started by starting the counters 25, 37 and 38 to count down from count 11111101000 to 00000000000. Memory locations "2024", . . .,"0" are thus addressed successively and the stepping motor 1 is stopped controllably via the same speed profile as that with which it was started. It should be noted that on traversing the memory locations "2024", . . ., "2031" the pulse-pause ratio of the pulses at the output of the memory 70 is equal to 3:5 because three of these memory locations carry a 1 and five of these memory locations carry a 0 at the location of the PULSE bit. If the output signal of the signal source 45 is made zero if one of the memory locations "2025", . . ., "2030" is addressed, it is not possible immediately to start counting down by means of the counters 25, 37 and 38 because the pulse-pause ratio of 3:5 would no longer be obtained and there would be an abrupt phase shift in the signal at the PULSE output. Since the UP bits of the memory locations "2025", . . ., "2030" are now 1, it is attained as already described above that the OR gates 24 and 40 do not pass pulses so that counters 25, 37 and 38 cannot yet start counting down. That cannot take place until counting reaches 2031, whereafter counter 25 is at count 000, so that memory location "2024" is addressed. Since the UP bit in memory location "2024" is 0, the OR gates 24 and 40 come into the state in which they pass signals to counters 25 and 37 and the OR gates 23 and 39 come into the state in which they block the signals. The counters 25, 37 and 38 then count down to 0 without there being any phase shift in the signal at the PULSE output of the memory 70. As soon as count 00000000000 is reached, the DOWN output will carry a "1" signal because the content of memory location "0" is 100. In combination with the fact that the output signal of signal source 45 is "0", the fact that the signal at the DOWN output is "1" results in the OR gates 23, 24, 39 and 40 passing no longer signals so that memory location "0" continues to be addressed and the stepping motor 1 continues to be stationary. The control device 5 shown in Fig. 2 enables a stepping motor to be started, kept in motion and re-stopped in a defined manner. Of course a slight modification of the configuration of the logic circuit between the signal source 45, the UP and the DOWN output and the counters 25, 37 and 38 enables a first part of the memory 70 to be used for starting the stepping motor 1 and a second part of the memory to be used for stopping it. The stepping motor 1 can thus be started via a first speed profile and stopped via a second speed profile. In the light of the extensive description that has been given with reference to Fig. 2, it is not necessary to describe this latter embodiment in detail with reference to a drawing.

Fig. 3A is an example of a speed profile illustrating the required speed of rotation $\omega$ against the time $t$ on the starting of a stepping motor 1 in a specific application.

Curve $a$ is shown as a gradual curve but it should be borne in mind that the speed of rotation $\omega$ of a stepping motor at a low $\omega$ can only be an average over a number of steps and has no connection with the speed at which the motor performs a step.

Fig. 3B shows the angle $\phi$ through which the motor has turned from a starting position against the time $t$ if starting is effected as shown in Fig. 3A. Since the frequency of the pulse generator 11 or 21 respectively is predetermined, curve $b$ is also the function representing the relationship between the angle $\phi$ through which the motor has turned and the number of pulses N that the pulse generator 11 or 21 respectively has delivered from the beginning of starting. In applications in which it is not so important how the speed of rotation $\omega$ is dependent upon the time but it is important how the speed of rotation is dependent upon the angle through which the motor has turned, $\omega$ in Fig. 3A should be reproduced as a function of the number of pulses N.

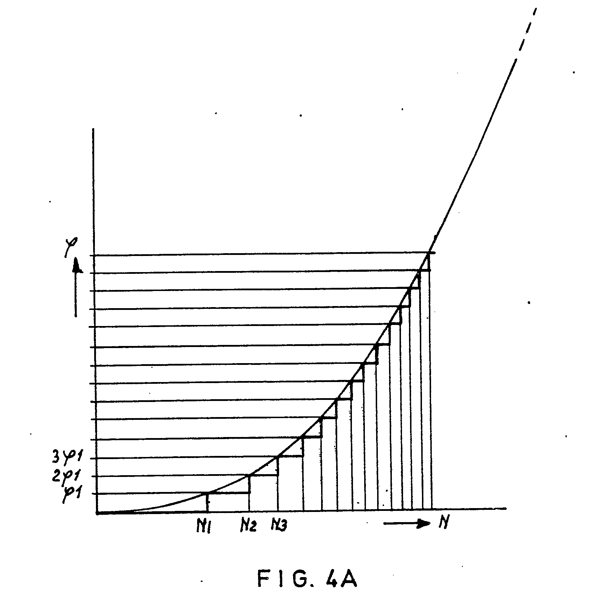

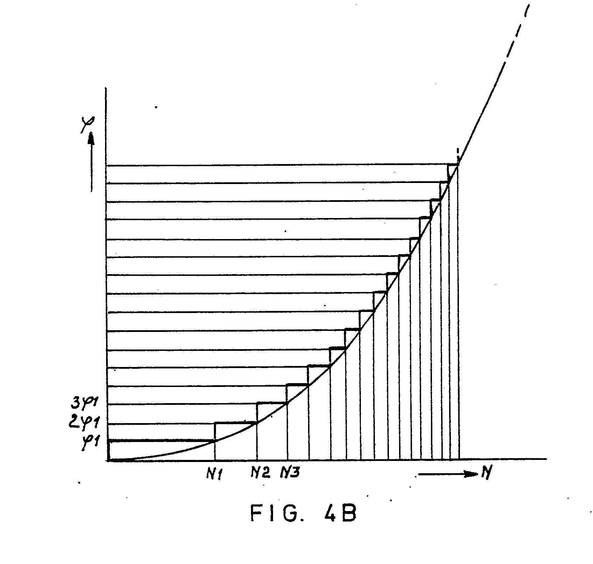

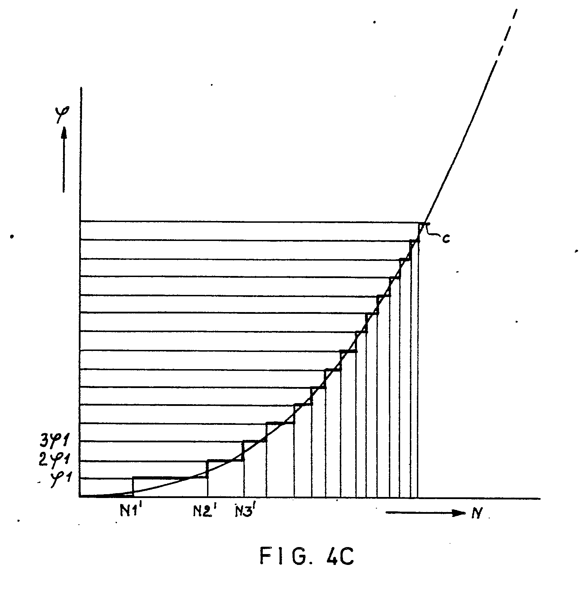

Figs. 4A to 4C inclusive show how the content of the memory locations of memory 13 or 70 respectively can be determined in order to obtain the profiles reproduced in Figs. 3A and 3B. Each transverse line along the vertical axis in Figs. 4A, 4B and 4C denotes one step of the stepping motor while the number of pulses to be counted is plotted along the horizontal axis. According to Fig. 4A, the first group of memory locations is filled with a 0 and the second group, in which a 1 is placed, starts with memory location N1, so that the first step causes a rotation to $\phi$ 1. The third group again contains 0 while the fourth group, which again contains a 1, starts with N2, so that the second step again causes a rotation through an angle $\phi$ 1 to the angle 2 $\phi$ 1, from the starting state. The sixth group starts with N3, and so on.

Similarly, in Fig. 4B, the first step is made at N=1 (similar to the diagram shown in Fig. 2A), and the next steps are made at N1, N2, N3 and so on. In Fig. 4C the steps are made at N1′, N2′, N3′, so that the curve $c$ which indicates the angle as a frequency of N oscillates around the required curve. It follows from Fig. 4C that the memory locations 0 to N1′−1 inclusive contain a 0. It is of course also possible to approximate the required curve with the curve $c$ by deducting the value (N1′−1) from the counts N1′, N2′, N3′ shown in Fig. 4C, so that the steps take place at the counts 1, (N2′−N1′+1), (N3′−N1′+1), and so on.

This also applies to the curve in Fig. 4A, the same profile being obtained by having the steps take place at the counts 1, N2−N1+1, N3−N1+1. It should be noted that Figs. 4A to 4C inclusive show a graphic determination of the counts N at which the stepping motor must make a step.

It will be clear that if the relationship shown by the curve $a$ or $b$ (in Figs. 3A and 3B respectively) is known in mathematical form, the counts at which the stepping motor must make a step can also be readily calculated.

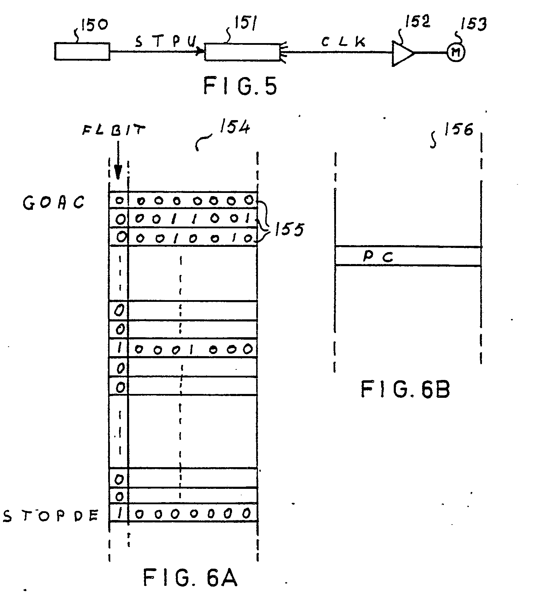

Figs. 5, 6, 7 and 8 are examples of how a control device for starting a stepping motor in a defined manner can be embodied by means of a programmable control system.

In Fig. 5, a pulse generator 150 generates pulses STPU at a predetermined frequency. The pulses STPU are detected and counted by means of a programmable control unit 151. One of the output signals of the control unit is the signal CLK. The signal CLK is the input signal for a power amplifier 152 whose output is connected to a stepping motor 153. The control unit 151 comprises a memory 154 in which a programme requiring to be performed is fixed and in which a number of figures 155 is fixed (Fig. 6A). The figures represent numbers of pulses which have to be counted by means of the control unit 151 before the output delivering the signal CLK can change its state.

Fig. 6A shows that part of the memory in which the figures are fixed. The first address bears the mark GOAC and the last address the mark STOPDE. One of the bits of the contents of the memory locations from GOAC to STOPDE inclusive is selected as the flag bit FLBIT, the meaning of which will be explained in detail in the following description. In addition to the flag bit FLBIT each of the memory locations contains a number the magnitude of which decreases from memory locations GOAC to the memory location in which the FLBIT changes from 0 to 1, and the magnitude of which in the following memory locations increases again as far as the memory location STOPDE.

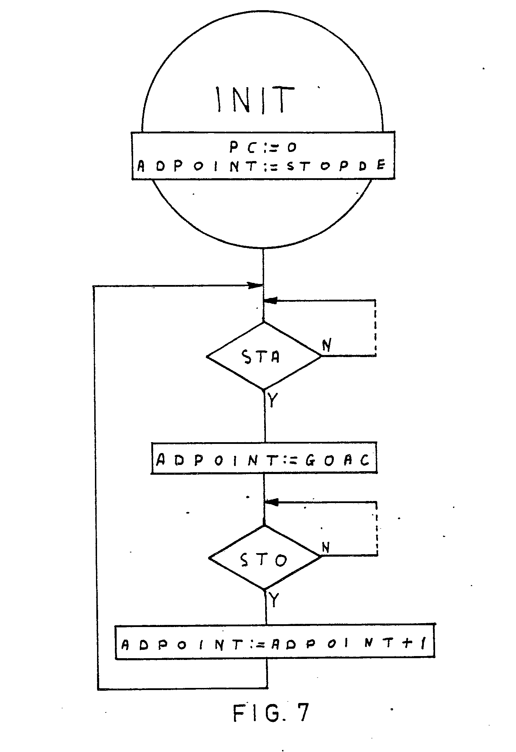

Fig. 6B shows a section of a read/write memory 156 forming part of the memory of the programmable control unit 151. One of the memory locations PC of the read/write memory 156 acts as a register in which there is retained the count of the number of pulses STPU counted by the programmable control unit 151. Fig. 7 shows that part of the programme which relates to the present invention as included in the memory programmable control unit 151. Forming part of an initiate section INIT of the programme, the content of the memory location PC is set to zero and an address pointer ADPOINT is made equal to STOPDE. A check is then made in the block STA to see whether the stepping motor 153 is to be started.

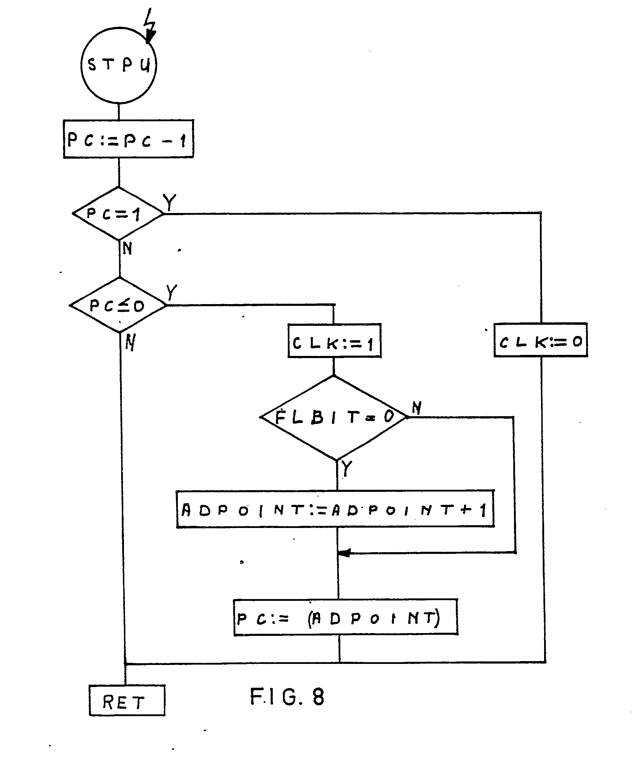

As long as this is not the case, the control unit 151 can occupy itself with other matters, as shown by the dashed line between the output N and the input of the block STA. If the control unit 151 has received a signal that the stepping motor 153 must be started, the address pointer ADPOINT is made equal to GOAC and the stepping motor will be started in the manner described in detail hereinbelow with reference to Fig. 8. The control unit 151 then checks in the block STO whether the started stepping motor is to be stopped again. As long as this is not the case, the control unit 151 can occupy itself with other matters, as shown by the dashed line between the output N and the input of the block STO. If it is the case, the address pointer ADPOINT which, as will be described hereinafter, had stopped at the memory location whose FLBIT is equal to 1, is increased by 1. After the stepping motor had stopped, the address pointer ADPOINT will have again reached the memory location with the mark STOPDE and the control unit 151 is again ready to re-start the stepping motor 153.

The pulse generator 150 which delivers the pulses STPU is connected to an interrupt input of the programmable control unit 151. Each pulse STPU will interrupt the current programme and in response to the STPU pulse an interrupt programme will be run through with priority. This priority interrupt programme is shown in greater detail in Fig. 8. In response to an interrupt pulse STPU the content of the memory location PC is reduced by 1.

Since the content of the memmry location PC in the initiate section INIT had been set to zero, the content of the memory location PC becomes equal to −1 in response to the first interrupt pulse STPU. A check is made in the "PC=1" block whether the content of the memory location PC is equal to 1. Since this is not so, the process is continued via the output N to the block "PC≤0". This is the case, and so the output delivering the signal CLK is made equal to 1 via output Y. A check is then made whether FLBIT is equal to 0. This is not so because the address pointer ADPOINT points to the memory location with the mark STOPDE, whose FLBIT is equal to 1. Via the output N of the block "FLBIT=0" the content of the memory location PC is now made equal to the content of the memory location indicated by the address pointer ADPOINT. In this case, the memory location is the one marked STOPDE, the content of which is equal to zero. As long as the stepping motor 153 does not need to be started, the above-described part of the interrupt programme shown in Fig. 8 will be run through in response to each interrupt pulse STPU. The output delivering the signal CLK will always remain equal to 1 and the amplifier 152 will deliver a D.C. voltage signal so that the stepping motor 153 will not be started.

In response to a signal that the stepping motor 153 must be started as described in connection with Fig. 7, the address pointer ADPOINT is made equal to GOAC.

In response to the then next interrupt pulse STPU, the content of the memory location PC again becomes equal to −1. Via the output N of the block "PC=1" and the output Y of the block "PC≤0", the signal CLK remains equal to 1.

The question is then put whether FLBIT is equal to zero.

Since the memory location marked GOAC is now addressed, this question is answered in the affirmative and the address pointer ADPOINT is increased by 1 via the output Y of the block "FLBIT=0". As a result, the memory location following the one marked GOAC is now indicated. The content of this memory location is a number, e.g. 25, which is then written in the memory location PC. This concludes the interrupt programme and the programmable control unit returns to the interrupted programme. In response to the next interrupt pulse STPU, the current programme is again interrupted and the content of the memory location PC is again reduced by 1 to 24. The question whether the content of the memory location PC is equal to 1 is answered in the negative again and the question whether the content of the memory location PC is less than or equal to zero is also answered in the negative, thus concluding the interrupt programme and the programmable control unit 151 returns to the interrupted programme. In the same way, the signal CLK remains to 1 during 23 interrupt pulses STPU after the signal has been given to the control unit 151 that the stepping motor 153 must be started.

In response to the 24th interrupt pulse STPU the content of the memory location PC becomes equal to 1. The question whether the content of the memory location PC is equal to 1 is now answered in the affirmative and in response thereto the signal CLK is made equal to zero. This concludes the interrupt programme in response to the 24th interrupt pulse STPU and the programmable control unit 151 returns to the interrupted programme. In response to the 25th interrupt pulse STPU the content of the memory location PC becomes equal to zero. The question whether the content of the memory location PC is equal to 1 is again answered in the negative and the question whether the content of the memory location PC is smaller than or equal to zero is answered in the affirmative. In response, the signal CLK is again made one. The question whether FLBIT is equal to zero is again answered in the affirmative and the address pointer ADPOINT is raised again by 1. The address pointer ADPOINT now points to the memory location two places on from the memory location marked GOAC and the content of that memory location is now stored in memory location PC.

This content is a number that is less than 25, e.g. 18. As described hereinbefore, the signal CLK again becomes 1 in response to the next interrupt pulse STPU. In response to this 0—1 changeover of the signal CLK, the stepping motor 153 makes one step. The signal CLK then remains 1 until the content of the memory location PC has become equal to 2. In response to the next interrupt pulse STPU, the content of the memory location PC becomes 1 and the signal CLK again becomes zero. In response to the then next interrupt pulse STPU, signal CLK again becomes equal to 1 and the address pointer ADPOINT is again increased by 1 so that the content of the next memory location indicated by the address pointer ADPOINT is now stored in the memory location PC. In this way the successive memory locations shown in Fig. 6A are run through until the memory location whose FLBIT is equal to 1 is reached. This memory location contains, for example, the digit 8 as content. This means that in response to the next 6 interrupt pulses STPU after the address pointer has indicated this memory location, the output signal CLK is equal to 1. In response to the 7th interrupt pulse STPU the content of the memory location PC becomes 1 and in response thereto the signal CLK becomes zero. In response to the then following 8th interrupt pulse STPU the content of the memory location PC becomes zero in response to which CLK again becomes equal to 1. Since FLBIT is now not equal to zero, the address pointer ADPOINT is not increased by 1 and continues to point to this memory location. Via the output N of the block "FLBIT=0" the content of this memory location is again stored in the memory location PC. This cycle repeats time after time. The frequency of the 0—1 changeovers in the signal CLK is thus equal to one-eighth of the frequency of the pulses STPU. The stepping motor 153 is thus controlled with pulses whose frequency is one-eighth of the frequency of the pulses STPU. The stepping motor 153 now rotates in synchronism with the pulse generator 150. As described in connection with Fig. 7, a check is then made through the programme to see whether the stepping motor 153 is to be stopped.

As long as this is not the case, the fact that FLBIT is 1 ensures that the address pointer ADPOINT is not increased by 1, so that the content of this memory location is again and again stored in the memory location PC. However, as soon as the control unit 151 receives the signal that the stepping motor 153 is to be stopped, the address pointer ADPOINT is increased by 1 via the output Y of the block "STO". In response to the next time that the content of the memory location PC is equal to zero, the signal CLK is again made equal to 1 via the output Y of the block "PC≤0", while the question whether FLBIT is equal to zero is again answered in the affirmative. In response thereto, the address pointer ADPOINT is again increased by 1 and the content of the associated memory location is stored in the memory location PC. In the same way as described hereinbefore, the memory locations up to and including the memory location marked STOPDE are now successively indicated by the address pointer ADPOINT. The figures in those memory locations become increasingly larger so that the 0—1 changeovers of the signal CLK occur at ever increasing intervals and the stepping motor 153 rotates continuously more slowly. Finally the address pointer ADPOINT reaches the memory location marked STOPDE and as already described hereinbefore this causes the signal CLK no longer to change and the stepping motor 153 stops.

In the foregoing description, the content of the memory location PC is always reduced by 1 until the said content became equal to zero. Other ways of counting are possible within the scope of the invention. One possibility is continually to increase the content of the memory location PC until its content is equal to the content of the memory location addressed by the address pointer ADPOINT.

## Claims

1. A device for generating stepping motor control pulses with a frequency gradually changing in time, the frequency of the control pulses being derived from the frequency of a constant frequency source (11, 21) according to a predetermined relation, which device is provided with a counter (12; 25; 37; 38) for counting the pulses delivered by the constant frequency source (11, 21) and a memory (13, 70) with a plurality of addressable memory locations, in which the predetermined relation is stored, characterised in that the counting outputs of the counter (12; 25; 37; 38) are connected to the address inputs of the memory (13; 70), in that the contents of each memory location represent either a first state or second state, in that the memory locations which contents represent the second state and those which contents represent the first state are arranged alternately in groups with consecutive addresses and in that the memory (13, 70) is provided with an output (15) on which there is a signal corresponding to the state represented by the contents of the addressed memory location, in that the sizes of the groups gradually change, reckoning from a starting address, and, in that for each group the number of memory locations is equal to a predetermined number belonging to that group.

2. A device according to claim 1 characterised in that the size of a group in a first number of groups decreases with increasing distance of the address of the group from the starting address and in that means are provided which after the count corresponding to the address most distant from the starting addresss has been reached, restrict the number of possible counts of the pulse counter to a selected cluster of counts in order to run through them again in the same sequence.

3. A device according to claim 2, characterised in that the groups of memory locations addressed by the selected cluster of counts are so selected that the sum of the number of successive memory locations forming a group and in which the contents of the memory locations represent the first state and the number of successive memory locations forming a group joining the last-mentioned group and in which the contents of the memory locations represent the second state, is always the same.

4. A device according to claim 3, characterised in that the number of groups of memory locations addressed by the selected cluster of counts is equal to 2.

5. A device according to claim 1, characterised in that the size of a group in a second number of groups increases with increasing distance of the address of that group from the starting address and in that means are provided with, after the count corresponding to the address most distant from the starting address has been reached, stop the pulse counter.

6. A device to claims 2 or 5, characterised in that the counter is an UP/DOWN counter (25; 37; 38), in that the first and the second number of groups are the same, and in that means are provided to cause the UP/DOWN counter to count up or down in order to traverse the groups in the one or other direction.

**Patentansprüche**

1. Gerät zur Steuerung eines Schrittmotors, das sich zeitabhängig schrittweise ändernde Steuerimpulse erzeugt, wobei die Frequenz der Steuerimpulse von der Frequenz eine konstanten Frequenzquelle (11, 21) entsprechend einer bestimmten Vorherbeziehung abgeleitet wird, mit einem Zähler (12; 25; 37; 38) zum Zählen der Impulse, die von der konstanten Frequenzquelle (11, 21) geliefert werden, mit einem Speicher (13, 70) mit einer Anzahl von adressierbaren Speicherplätzen, in dem die vorherbestimmte Beziehung gespeichert ist, dadurch gekennzeichnet, dass die Zählausgänge des Zählers (12; 25; 37; 38) mit den Adresseneingängen des Speichers (13; 70) verbunden sind, dass der Inhalt jedes Speicherplatzes entweder einen ersten Zustand oder einen zweiten Zustand repräsentiert, dass die Speicherplätze deren Inhalt den zweiten Zustand repräsentiert, und die Speicherplätze deren Inhalt den ersten Zustand repräsentiert, wechselweise in Gruppen mit aufeinanderfolgenden Adressen angeordnet sind, dass der Speicher (13, 70) einen Ausgang (15) aufweist, an dem ein Signal auftritt, das dem durch den Inhalt des addressierten Speicherplatzes repräsentierten Zustand entspricht, dass die Grösse der Gruppen gerechnet von einer Startadresse sich schrittweise ändert, und dass für jede Gruppe die Anzahl von Speicherplätzen gleich einer vorherbestimmten, zu dieser Gruppe gehörenden Anzahl ist.

2. Gerät nach Anspruch 1, dadurch gekennzeichnet, dass die Grösse einer Gruppe in einer ersten Anzahl von Gruppen mit ansteigendem Abstand der Adresse der Gruppe von der Startadresse abnimmt, und dass Mittel vorgesehen sind, die nach dem Erreichen des Zählstands, welcher der am weitesten von der Startadresse entfernten Adresse entspricht, die Anzahl möglicher Zählstände des Impulszählers auf eine vorherbestimmte Gruppe von Zählständen begrenzt, um diese in derselben Reihenfolge erneut zu durchlaufen.

3. Gerät nach Anspruch 2, dadurch gekennzeichnet, dass die von der ausgewählten Gruppe von Zählständen adressierten Gruppen von Speicherplätzen derart ausgewählt werden, dass die Summe der Anzahl aufeinanderfolgender Speicherplätze, die eine Gruppe bilden und in denen der Inhalt der Speicherplätze den ersten Zustand repräsentiert, und der Anzahl von aufeinanderfolgenden Speicherplätze, die eine Gruppe bilden, welche an die zuletzt erwähnte Gruppe anschliesst ·und worin der Inhalt der Speicherplätze den zweiten Zustand repräsentiert, immer dieselbe ist.

4. Gerät nach Anspruch 3, dadurch gekennzeichnet, dass die Anzahl der durch die ausgewählte Gruppe von Zählständen adressierten Gruppen von Speicherplätzen gleich 2 ist.

5. Gerät nach Anspruch 1, dadurch gekennzeichnet, dass die Grösse einer Gruppe in einer zweiten Anzahl von Gruppen mit dem ansteigenden Abstand der Adresse dieser Gruppe von der Startadresse ansteigt, und dass Mittel vorgesehen sind, welche den Impulszähler anhalten, nachdem der Zählstand erreicht wurde, welcher der von der Startadresse am weitesten entfernten Adresse entspricht.

6. Gerät nach Anspruch 2 oder 5, dadurch gekennzeichnet, dass der Zähler ein Aufwärts-Abwärtszähler (25; 37; 38) ist, dass die erste und die zweite Anzahl von Gruppen gleich ist, und dass Mittel vorgesehen sind, durch die eine Aufwärtszählung oder Abwärtszählung dieses Zählers verursacht wird, um die Gruppen in der einen oder anderen Richtung zu durchlaufen.

**Revendications**

1. Dispositif générateur d'impulsions de commande de moteur pas à pas avec une fréquence qui change progressivement dans le temps, la fréquence des impulsions de commande étant dérivée de la fréquence d'une source à fréquence constante (11, 21) selon une relation prédéterminée, ce dispositif comportant un compteur (12; 25; 37; 38) pour compter les impulsions délivrées par la source à fréquence constante (11, 21) et une mémoire (13, 70) avec plusieurs positions de mémoire adressables, dans laquelle le relation prédéterminée est mémorisée, caractérisé en ce que les sorties de comptage du compteur (12; 25; 37; 38) sont connectées aux entrées d'adresse de la mémoire (13; 70), en ce que le contenu de chaque position de mémoire représente un premier état ou un second état, en ce que les positions de mémoire dont les contenus représentent le second état et celles dont le contenu représente le premier état sont disposées alternativement en groupes avec des addresses consécutives et en ce que la mémoire (13; 70) comporte une sortie (15) à laquelle apparait un signal correspondant à l'état

représenté par le contenu de la position de mémoire adressée, en ce que les dimensions des groupes changent progressivement, comptées à partir d'une adresse de départ, et en ce que pour chaque groupe, le nombre des positions de mémoire est égal à un nombre prédéterminé appartenant à ce groupe.

2. Disposif selon la revendication 1, caractérisé en ce que la dimension d'un groupe dans un premier nombre de groupes diminue avec l'augmentation de la distance de l'adresse du groupe à partir de l'adresse de départ et en ce qu'un dispositif est prévu qui, après que le comptage correspondant à l'adresse la plus éloignée de l'adresse de départ a été atteint, limite le nombre des comptages possibles du compteur d'impulsions à un ensemble sélectionné de comptages afin de passer pas ces derniers à nouveau dans la même séquence.

3. Dispositif selon la revendication 2, caractérisé en ce que les groupes des positions de mémoire adressées par l'ensemble sélectionné de comptages sont choisis de manière que la somme du nombre des positions de mémoire successives formant un groupe et dans lesquelles les contenus des positions de mémoire représentent le premier état et du nombre des positions de mémoire successives formant un groupe adjacent audit premier groupe et dans lesquelles les contenus des positions de mémoire représentent le second état, soit toujours la même.

4. Dispositif selon la revendication 3, caractérisé en ce que le nombre des groupes de positions de mémoire adressées par l'ensemble sélectionné de comptages est égal à 2.

5. Dispositif selon la revendication 1, caractérisé en ce que la dimension d'un groupe dans un second nombre de groupes augmente avec une distance croissante de l'adresse de ce groupe à partir de l'adresse de départ et en ce qu'un dispositif est prévu qui, après que le comptage correspondant à l'adresse la plus éloignée de l'adresse de départ a été atteint, arrête le compteur d'impulsions.

6. Dispositif selon la revendication 2 ou 5, caractérisé en ce que le compteur est un compteur-décomteur (25; 37; 38), en ce que le premier et le second nombre de groupes sont les mêmes et en ce qu'un dispositif est prévu pour que le compteur-décompteur compte ou décompte afin de franchir les groupes dans un sens ou dans l'autre.

FIG.1

FIG.1A

1

FIG. 2

0 077 094

```
                    A                                   D U P

        0     0 0 0 0 0 0 0 0 0 0                       1 0 0
        1     0 0 0 0 0 0 0 0 0 1                       0 0 1
        2                                               
        :                                               
      1 6 8   0 0 0 1 0 1 0 1 0 0 0                      0 0 1
      1 6 9   0 0 0 1 0 1 0 1 0 0 1                      0 0 0

      3 3 6   0 0 1 0 1 0 1 0 0 0 0                      0 0 0
      3 3 7   0 0 1 0 1 0 1 0 0 0 1                      0 0 1

    2 0 2 2   1 1 1 1 1 1 0 0 1 1 0                      0 0 0
    2 0 2 3   1 1 1 1 1 1 0 0 1 1 1                      0 0 1
    2 0 2 4   1 1 1 1 1 1 0 1 0 0 0                      0 0 1
              1 1 1 1 1 1 0 1 0 0 1                      0 1 1
              1 1 1 1 1 1 0 1 0 1 0                      0 1 0
              1 1 1 1 1 1 0 1 0 1 1                      0 1 0
              1 1 1 1 1 1 0 1 1 0 0                      0 1 0
              1 1 1 1 1 1 0 1 1 0 1                      0 1 0
              1 1 1 1 1 1 0 1 1 1 0                      0 1 0
    2 0 3 1   1 1 1 1 1 1 0 1 1 1 1                      0 1 1
```

FIG. 2A

FIG. 3A

FIG. 3B

FIG. 4A

FIG. 4B

FIG. 4C

FIG.5

FIG. 6A

FIG. 6B

FIG. 7

F.I.G. 8